# EUROPEAN PATENT SPECIFICATION

(11) **EP 2 717 710 B1**
(45) Date of publication and mention of the grant of the patent: **23.05.2018**
(21) Application number: 12794346.2
(22) Date of filing: 03.12.2012
(51) Int. Cl.: A23G 3/34, A23G 1/54, A23G 1/56

(54) **A FIBER ENRICHED FILLING COMPOSITION FOR A CHOCOLATE PRODUCT**
BALLASTSTOFF-ANGEREICHERTE FÜLLZUSAMMENSETZUNG FÜR EIN SCHOKOLADENPRODUKT
COMPOSITION DE REMPLISSAGE ENRICHIE EN FIBRES POUR PRODUIT EN CHOCOLAT

(30) Priority: 03.12.2011 EP 11009575; 03.01.2012 EP 12150072
(43) Date of publication of application: 16.04.2014
(73) Proprietor: Cavalier NV, 9900 Eeklo (BE)
(72) Inventor: VERDEGEM, Felix, B-9900 Eeklo (BE)
(74) Representative: BiiP cvba
(86) International application number: PCT/EP2012/074211
(87) International publication number: WO 2013/079716

(56) References cited:
- EP-A1- 0 653 169
- EP-A2- 0 943 244
- WO-A1-93/02566
- WO-A1-2011/046423
- WO-A1-2011/069224
- WO-A1-2011/107259
- CN-A- 101 816 318
- JP-A- 4 148 659
- JP-A- 4 288 093
- US-A1- 2004 086 615
- US-A1- 2004 228 951
- US-A1- 2007 082 104
- US-A1- 2010 189 861
- US-A1- 2011 091 637
- US-B1- 6 773 744

## Description

### FIELD OF THE INVENTION

The invention relates to a fiber enriched filling composition for a chocolate product comprising, and to a chocolate product comprising such filling composition.

### BACKGROUND

In the context of increasing pressure on repulsing overweight and diabetes, confectionary product manufacturers attempt to reduce or even replace sucrose content in their products.

An example of the state of the art is for example WO2007059644, wherein chocolate compositions wherein at least 30% by weight of the sucrose content of regular chocolate is replaced by a combination of dietary fibers such as dextrin, inulin and fructo-ol igosaccharide.

Another example is WO2006015880 wherein a sugar replacement composition comprising a bulking fiber composition and a high intensity sweetener composition is described.

With respect to fillings for chocolate products, since a huge variety of such fillings is available on the market, it is a big challenge to replace the sucrose content of this variety of fillings while keeping sweetness, organoleptic requirements like mouthfeel, taste and smell, texture, body, processability (laminating extruding, depositing, molding, etc), hygroscopic characteristics, brittleness, granularity, viscosity, fat bloom stability, shelf life, melting behavior, laxative effect, digestibility, etc at least similar or improved compared to conventional sucrose containing fillings.

It has now been surprisingly found that the filling compositions of the present invention formulated with 0,01 - 1% steviol glucoside and/or steviol glycoside provide similar or improved characteristics compared to conventional sucrose based fillings.

In addition, the effectiveness of active water regulating compounds such as glycerol for controlling the active water content in low-fat fillings in the presence of steviol glucoside and/or steviol glycoside is established. This is required since specifications such as fat bloom stability, shelf life and melting behavior are important product properties of chocolates and fillings that, among others, are influenced by active water content and need to be controlled.

The above is especially important and useful with regards to multi-layered fillings.

Further, it has been found that for praliné type filling compositions the total fiber content present in the praline type filling composition is most effectively processed by at least partial uptake via fiber content present in a chocolate composition.

### SUMMARY OF THE INVENTION

The present invention is directed to a fiber enriched filling composition for a chocolate product comprising:
a. 0,01 - 1% steviol glucoside and/or steviol glycoside
b. 1-60% fat by weight
c. 0,1-10% inuline by weight and/or 0,1-20% fructo-oligosaccharide by weight as fibers
d. a polyol

Further, the present invention is directed to a chocolate product comprising such filling composition.

### DETAILED DESCRIPTION

In a first embodiment, the present invention provides a fiber enriched filling composition for a chocolate product comprising:
a. 0,01 - 1% steviol glucoside and/or steviol glycoside
b. 1-60% fat by weight
c. 0,1-10% inuline by weight and/or 0,1-20% fructo-oligosaccharide by weight as fibers
d. a polyol

The polyol may be selected from erythritol, arabitol, xylitol, sorbitol, glycerol, mannitol, lactitol, maltitol, maltitol syrup, mallitol, isomalt, hydrogenated starch hydrolysate or combinations thereof.

In an embodiment in accordance with the present invention, the polyol comprises glycerol. By using an appropriate amount of glycerol the active water content in low-fat fillings can be controlled.

In an embodiment in accordance with the present invention, a fiber enriched filling is provided wherein the fibers comprise dietary fibers, as for example inuline and/or fructo-oligosaccharide and/or dextrin.

In a particular embodiment in accordance with the present invention the fibers comprise polydextrose and the polyol comprises erythritol and glycerol.

In low-fat fillings, polydextrose may be used in high amount since it is better digestable and has decreased laxative and flatulence effects compared to fructo-oligosaccharide. However, with regards to viscosity the amount of polydextrose is limited. Therefore fructo-oligosaccharide and/or erythritol and/or glycerol may be added.
In an embodiment, the polyol may comprise glycerol, and erythritol or sorbitol.

In embodiment of, the fiber enriched filling may comprise an amount of 14-30% of glycerol by weight alone or with erythritol.

Preferably, it may comprise 0,01-0,2% steviol glucoside and/or steviol glycoside by weight, 5-50% fat, and 0,1-4% inuline by weight and/or 10-20% fructo-oligosaccharide by weight.

In a preferred embodiment, the filling composition may comprise 0,01-0,05% steviol glucoside and/or steviol glycoside by weight, 5-10% fat, 0.5-3% inuline by weight and 10-20% fructo-oligosaccharide by weight.

In another preferred embodiment, the filling composition may comprise 0,04-0,0.08% steviol glucoside and/or steviol glycoside by weight, 15-60% fat, 2-4% inuline by weight and 2-4% fructo-oligosaccharide by weight.

In another embodiment, the filling composition may comprise 0,01-1% steviol glucoside and/or steviol glycoside by weight, 9-14% glycerol by weight, 2-4% inuline by weight and 30-35 % fructo-oligosaccharide by weight.

In an embodiment of the fiber enriched filling according to the present invention, the ratio between the amount of inuline and the amount of fructo-oligosaccharide is between 0,8 and 1,2.

In an embodiment of the fiber enriched filling according to the present invention, the ratio between the amount of dextrin and the amount of inulin and/or fructo-oligosaccharide is between 0,8 and 1,2.

The filling composition may further comprise additional fiber content selected from gums, hemicellulose, inulin, lignin, mucilages, oligofructose, pectin, psyllium, resistant maltodextrin or combinations thereof.

The filling composition may further comprise milk solid content selected from whole milk, whole milk powder, skim milk, skim milk powder, condensed whole milk, condensed skim milk, cream, buttermilk, buttermilk powder, whey protein isolate, whey protein concentrate, whey protein hydrolysate, whey powder, evaporated milk, soy milk, soy protein isolate, soy protein concentrate, soy protein hydrolysate, tofu, lactose-free milk, milk replacers or combinations thereof.

In the filling composition according to the present invention, the fat is selected from cocoa butter, chocolate butter, olive oil, soya oil, sunflower oil, rape seed oil, cotton seed oil, maize oil, safflower oil, ground nut oil, sesame oil, palm oil, coconut oil, butter fat, butter, butter cream, and derivatives thereof.

The filling composition may further comprise an emulsifier selected from egg yolk, lecithin, glycerol, mono and diglycerides, polysorbate 80, polysorbates, soy lecithin, propylene glycol monostearate, glyceryl monostearate, or combinations thereof.

The filling composition may further comprise one or more vitamins, minerals, electrolytes, trace elements, oils, health supplements, prebiotics, probiotics, kefir, phytonutrients, botanical, nutraceuticals, herbs, amino acids, acidifiers, buffers, salts and combinations thereof.

The filling composition may further comprise energy-related food ingredients selected from at least one of caffeine, taurine, guarana, B vitamins, ginseng, ginkgo biloba, L-carnitine, sugars, anti-oxidants or combinations thereof.

The filling composition may further comprise fruit selected from banana, peach, apricot, lemon, raspberry, strawberry, wild berries, mango, passion fruit, guava, pomegranate, orange, blood orange, pear, lime mandarin, calamansi, pineapple, papaya, lychee, kiwi, coconut, rhubarb, pumpkin, plum, cantaloupe, green apple, fig, wild strawberry, redcurrant, cherry, blueberry, cranberry, blackcurrant, black cherry, watermelon, apple, carrot, grape, lemongrass, pink grapefruit, cassis, and combinations thereof, or bean, cocoa, nut blends and pastes, coffee, fruit purees, fruit juices, fruit pulps, vegetables, spices, caramel, liquor, liqueur, natural and artificial flavours, extracts, and combinations thereof.

Additionally, in an embodiment of the present invention, a chocolate product is provided comprising a filling composition according to any of the above claims. Such chocolate product may be any product (tablet, bar, snack, praline, toffee, pastry, cake, etc.) comprising a chocolate composition and suitable for carrying a filling.

### EXAMPLE 1:

Praliné type filling comprising:
Hazelnut paste 25-35%
cacao butter 10-15%
vegetable fat 5-15%
cacao paste 5-15%
dextrin 4-8%
erythritol 4-8%
inulin 2-4%
fructo-oligosaccharide 2-4%
steviol glycoside 0.04-0.08%
milk powder, whey powder, soya lecithin

### EXAMPLE 2:

Low-fat filling comprising:
polydextrose 30-50%
erythritol 10-20%
fructo-oligosaccharide 10-20%
vegetable fat 5-10%
glycerol % 4-8%
dextrin 1-6%
inulin 0.5-3%
steviol glycoside 0.01-0.05%
milk powder, whey powder, soya lecithin

### EXAMPLE 3:

Multi-layered filling comprising a praliné type layer and a fruit jelly type layer, the latter comprising:

| | |
|---|---|
| Polydextrose | 50-70% |
| fruit powder | 5-15% |
| water | 10-20% |
| erythritol | 8-12% |
| glycerol | 8-12% |
| steviol glycoside | 0.01-0.05% |

### EXAMPLE 4:

dark mousse/truffle type filling comprising:
concentrated butter 30-50%
cacao paste 15-20%
erythritol 15-20%
dextrin 5-10%
glycerol 3-7%
fructo-oligosaccharide 2-5%
inulin 2-5%
cacao butter 2-5%
steviol glycoside 0.02-0.06%

### EXAMPLE 5:

Milk mousse/truffle type filling comprising:
concentrated butter 30-50%
erythritol 15-20%
cacao butter 5-15%
cacao paste 2-8%
glycerol 3-7%
dextrin 2-6%
inulin 1-3%
fructo-oligosaccharide 1-3%
steviol glycoside 0.02-0.06%
milk powder, whey powder, soya lecithin

### EXAMPLE 6:

white mousse/truffle type filling comprising:
concentrated butter 30-50%
erythritol 15-20%
cacao butter 5-15%
glycerol 3-7%
dextrin 2-6%
inulin 1-3%
fructo-oligosaccharide 1-3%
steviol glycoside 0.02-0.06%
milk powder, whey powder, soya lecithin

### EXAMPLE 7 :

ganache dark type filling comprising:
cacao paste 20-30%
cream 40% fat 15-20%
glycerol 5-15%
erythritol 5-15%
dextrin 5-15%
sorbitol 5-10%
concentrated butter 2-8%
fructo-oligosaccharide 2-7%
inulin 2-7%
cacao butter 2-7%
steviol glycoside 0.03-0.07%
soya lecithin

### EXAMPLE 8:

ganache milk type filling comprising:
cream 40% fat 20-25%
cacao butter 10-14%
glycerol 10-14%
erythritol 8-12%
cacao paste 5-10%
sorbitol 5-10%
concentrated butter 3-7%
dextrin 4-6%
inulin 1-3%
fructo-oligosaccharide 1-3%
steviol glycoside 0,03-0,07%
milk powder, whey powder, soya lecithin

### EXAMPLE 9:

Fruity ganache type filling comprising:

| | |
|---|---|
| Erythritol | 0,3-0.4% |
| Fos | 32-34% |
| Glycerol | 11-12% |
| Inuline | 3-4% |

0,01-1% steviol glucoside and/or steviol glycoside

| | |
|---|---|
| Hazelnut paste | 6% |
| Concentrated butter | 12% |
| Orange mash | 25% |

### EXAMPLE 10:

Low-fat filling comprising:

| | |
|---|---|
| Polydextrose | 15-25% |
| FOS | 3-7% |
| Erythritol | 0.5-2% |
| Glycerol | 1-3% |

0,01-1% steviol glucoside and/or steviol glycoside

## Claims

1. A fiber enriched filling composition for a chocolate product comprising:
a. 0,01 - 1% steviol glucoside and/or steviol glycoside
b. 1-60% fat by weight
c. 0,1-10% inuline by weight and/or 0,1-20% fructo-oligosaccharide by weight as fibers
d. a polyol

2. A filling composition according to claim 1, wherein the polyol comprises glycerol.

3. A fiber enriched filling according to claim 2, wherein the polyol further comprises erythritol or sorbitol.

4. A fiber enriched filling according to claim 3, comprising an amount of 14-30% of glycerol by weight alone or with erythritol.

5. A filling composition according to any of the above claims, comprising 0,01-0,2% steviol glucoside and/or steviol glycoside by weight, 5-50% fat, and 0,1-4% inuline by weight and/or 10-20% fructo-oligosaccharide by weight.

6. A filling composition according to any of the above claims, comprising 0,01-0,05% steviol glucoside and/or steviol glycoside by weight, 5-10% fat, 0.5-3% inuline by weight and 10-20% fructo-oligosaccharide by weight.

7. A filling composition according to any of the claims 1-4, comprising 0,04-0,0.08% steviol glucoside and/or steviol glycoside by weight, 15-60% fat, 2-4% inuline by weight and 2-4% fructo-oligosaccharide by weight.

8. A fiber enriched filling composition according to any of the above claims wherein the ratio between the amount of inuline and the amount of fructo-oligosaccharide is between 0,8 and 1,2.

9. A fiber enriched filling composition according to any of the above claims wherein the dietary fibers comprise dextrin and inuline and/or fructo-oligosaccharide, and wherein the ratio between the amount of dextrin and the amount of inulin and/or fructo-oligosaccharide is between 0,8 and 1,2.

10. A chocolate product comprising a filling composition according to any of the above claims.

## Patentansprüche

1. Ballaststoff angereicherte Füllungszusammensetzung für ein Schokoladenprodukt, umfassend:
a. 0,01-1% Steviol-Glucoside und/oder Steviolglykosid
b. 1-60 Gew.-% Fett
c. 0,1-10 Gew.-% Inulin und/oder 0,1-20 Gew.-% Fructooligosaccharid als Ballaststoffe
d. ein Polyol

2. Füllzusammensetzung nach Anspruch 1, wobei das Polyol Glycerin umfasst.

3. Ballaststoff angereicherte Füllung nach Anspruch 2, wobei das Polyol weiter Erythrit oder Sorbit umfasst.

4. Ballaststoff angereicherte Füllung nach Anspruch 3, umfassend eine Menge von 14-30 Gew.-% Glycerin allein oder mit Erythrit.

5. Füllungszusammensetzung nach einem der vorstehenden Ansprüche, umfassend 0,01-0,2 Gew.-% Steviolglucosid und/oder Steviolglykosid, 5-50 Gew.-% Fett und 0,1-4 Gew.-% Inulin und/oder 10-20 Gew.-% Fructo-Oligosaccharid.

6. Füllungszusammensetzung nach einem der vorstehenden Ansprüche, umfassend 0,01-0,05 Gew.-% Steviolglucosid und/oder Steviolglykosid, 5-10 Gew.-% Fett, 0,5-3 Gew.-% Inulin und 10-20 Gew.-% Fructo-Oligosaccharid.

7. Füllungszusammensetzung nach einem der Ansprüche 1 bis 4, umfassend 0,04-0,08 Gew.-% Steviolglucosid und/oder Steviolglykosid, 15-60 Gew.-% Fett, 2-4 Gew.-% Inulin und 2-4 Gew.-% Fructo-Oligosaccharid.

8. Ballaststoff angereicherte Füllzusammensetzung nach einem der vorstehenden Ansprüche, wobei das Verhältnis zwischen der Menge an Inulin und der Menge an Fructo-Oligosaccharid zwischen 0,8 und 1,2 liegt.

9. Ballaststoff angereicherte Füllungszusammensetzung nach einem der vorherigen Ansprüche, wobei die Ballaststoffe Dextrin und Inulin- und/oder Fructo-Oligosaccharid umfassen und wobei das Verhältnis zwischen der Menge an Dextrin und der Menge an Inulin und/oder Fructo-Oligosaccharid zwischen 0,8 und 1,2 liegt.

10. Schokoladenprodukt, umfassend eine Füllzusammensetzung nach einem der vorstehenden Ansprüche.

## Revendications

1. Composition de remplissage enrichie en fibres pour un produit chocolaté comprenant :
a. 0,01 à 1 % de glucoside de stéviol et/ou de glycoside de stéviol
b. 1 à 60 % en poids de graisse
c. 0,1 à 10 % en poids d'inuline et/ou 0,1 à 20 % en poids de fructo-oligosaccharide en tant que fibres
d. un polyol

2. Composition de remplissage selon la revendication 1, dans lequel le polyol comprend du glycérol.

3. Remplissage enrichi en fibres selon la revendication 2, dans lequel le polyol comprend en outre de l'érythritol ou du sorbitol.

4. Remplissage enrichi en fibres selon la revendication 3, comprenant une quantité de 14 à 30 % en poids de glycérol seul ou avec de l'érythritol.

5. Composition de remplissage selon l'une quelconque des revendications précédentes, comprenant 0,01 à 0,2 % en poids de glucoside de stéviol et/ou de glycoside de stéviol, 5 à 50 % de graisse, et 0,1 à 4 % en poids d'inuline et/ou 10 à 20 % en poids de fructo-oligosaccharide.

6. Composition de remplissage selon l'une quelconque des revendications précédentes, comprenant 0,01 à 0,05 % en poids de glucoside de stéviol et/ou de glycoside de stéviol, 5 à 10 % de graisse, 0,5 à 3 % en poids d'inuline et 10 à 20 % en poids de fructo-oligosaccharide.

7. Composition de remplissage selon l'une quelconque des revendications 1 à 4, comprenant 0,04 à 0,0.08 % en poids de glucoside de stéviol et/ou de glycoside de stéviol, 15 à 60 % de graisse, 2 à 4 % en poids d'inuline et 2 à 4 % en poids de fructo-oligosaccharide.

8. Composition de remplissage enrichie en fibres selon l'une quelconque des revendications précédentes, dans laquelle le rapport entre la quantité d'inuline et la quantité de fructo-oligosaccharide est entre 0,8 et 1,2.

9. Composition de remplissage enrichie en fibres selon l'une quelconque des revendications précédentes, dans laquelle les fibres alimentaires comprennent de la dextrine et de l'inuline et/ou du fructo-oligosaccharide, et dans laquelle le rapport entre la quantité de dextrine et la quantité d'inuline et/ou le fructo-oligosaccharide est entre 0,8 et 1,2.

10. Produit chocolaté comprenant une composition de remplissage selon l'une quelconque des revendications précédentes.
